# EUROPÄISCHE PATENTSCHRIFT

(11) **EP 3 063 030 B1**
(45) Veröffentlichungstag und Bekanntmachung des Hinweises auf die Patenterteilung: **19.02.2020**
(21) Anmeldenummer: 14758947.7
(22) Anmeldetag: 04.09.2014
(51) Int. Cl.: B60J 10/70, E06B 7/23, B60J 10/34, B60J 10/00

(54) **ABDICHTUNGSANORDNUNG FÜR EINE FAHRZEUGSCHEIBE**
SEALING ASSEMBLY FOR A GLASS PANE IN A MOTOR VEHICLE
AGENCEMENT D'ÉTANCHÉITÉ POUR UNE VITRE DE VÉHICULE

(30) Priorität: 24.09.2013 EP 13185754
(43) Veröffentlichungstag der Anmeldung: 07.09.2016
(73) Patentinhaber: Saint-Gobain Glass France, 92400 Courbevoie (FR)
(72) Erfinder: TIMMERMANN, Alwin, 50933 Köln (DE)
(74) Vertreter: Gebauer, Dieter Edmund
(86) Internationale Anmeldenummer: PCT/EP2014/068816
(87) Internationale Veröffentlichungsnummer: WO 2015/043908

(56) Entgegenhaltungen:
- WO-A1-2013/076513
- WO-A1-2013/120671
- DE-A1- 19 939 191
- JP-A- 2012 240 454

## Beschreibung

Die Erfindung betrifft eine Abdichtungsanordnung für Fahrzeugscheiben, ein Verfahren zu deren Herstellung und deren Verwendung.

Kraftfahrzeuge müssen in der Regel im Bereich zwischen der Fahrzeugwindschutzscheibe und der Motorkarosserie gegen Feuchtigkeit, Fahrtwind und eindringenden Schmutz geschützt werden. Dabei muss der Übergangsbereich zwischen Windschutzscheibe und Metallkarosserie abgedichtet werden. In diesem Übergangsbereich werden vielfach Wasserkästen aus Kunststoff eingesetzt. Wasserkästen schützen im Fahrzeug spritzwassergefährdete Komponenten vor Feuchtigkeit. Die Wasserkastenabdeckung ermöglicht ein Abfließen des sich an der Windschutzscheibe ansammelnden Wassers. Die Werkstoffe Glas, verschiedene Kunststoffe und Metall zeigen jedoch deutlich unter-schiedliche Eigenschaften, die besondere Überlegungen bei der Abdichtung erforderlich machen. Um eine sichere Abdichtung zu ermöglichen, werden insbesondere im kritischen Bereich des Wasserkastens vielfach polymere Werkstoffe wie Gummidichtungen eingesetzt. Diese Aufgabe übernimmt in vielen Fällen eine spezielle Wasserkastenabdichtung, die zwischen der Unterkante der Windschutzscheibe und der Wasserkastenabdeckung angeordnet ist. Die Wasserkastenabdichtung muss sowohl stabil, beständig als auch einfach zu montieren sein. Die Herstellung der Wasserkastenabdichtung erfolgt in der Regel durch Extrusionsverfahren, die Fixierung an den Baugruppen durch geeignete Klebstoffe und Klebesysteme.

DE 199 61 706 A1 offenbart eine Anordnung zum Verbinden einer fest eingebauten Windschutzscheibe mit einem Karosseriebauteil, insbesondere einem Wasserkasten. Die Anordnung umfasst einen an der Fahrzeugscheibe haftenden Profilstrang mit Lippe. Die Lippe weist auf ihrer Unterseite Mittel zum Verbinden mit einem Bauteil auf.

DE 10 2009 026 369 A1 offenbart eine Abdichtungsanordnung für Fahrzeugscheiben. Diese umfasst eine Halteschiene, eine Windschutzscheibe und eine über eine Verbindungsstelle verbundene Abdeckung mit Rastschiene. Die Halteschiene umfasst einen Rastkanal, welcher mit einem Federschenkel und einem Stützkörper gebildet wird. Die Abdeckung ist mit der Rastschiene in dem Rastkanal eingerastet und ein Federelement ist zwischen der Anlagefläche der Abdeckung und dem Stützkörper angeordnet.

WO 2013/120671 A1 offenbart eine Abdichtungsanordnung für Fahrzeugscheiben. Die Anordnung umfasst eine an einer Scheibe befestigte Halteschiene mit einem Rastkanal, der durch eine Führungsschiene und einen Federschenkel gebildet ist. Des Weiteren umfasst die Abdichtungsanordnung eine Abdeckung mit einem Führungskanal, der durch die Rastschiene und einen Positionierungsanschlag gebildet ist. Die Zentrierung und Fixierung der Abdichtungsanordnung erfolgt durch Einspannen der Führungsschiene im Führungskanal und Einrasten der Rastschiene im Rastkanal.

DE 199 39 191 A1 offenbart eine Anordnung zum Verbinden einer Fahrzeugscheibe mit einem angrenzenden Bauteil mittels eines Profilteils, welches einerseits an der Scheibenkante befestigt ist und anderseits das Bauteil abstützt.

Damit eine hohe Dichtigkeit und Festigkeit der Abdichtungsanordnung erreicht werden kann, insbesondere eine passgenaue Verrastung, ist eine sehr präzise Fertigung erforderlich. Weichen die erstellten Bauteile von den Fertigungsvorgaben nur geringfügig ab, so sind häufig sehr hohe Kräfte zu Verrastung der Komponenten erforderlich. Je nach Abweichung kann sogar eine nur eingeschränkte Abdichtung die Folge sein. Große Verrastungskräfte und Fertigungstoleranzen können zudem die Positionierungsgenauigkeit der Abdichtungsvorrichtung beeinträchtigen und den Montagevorgang erheblich erschweren.

Die Aufgabe der Erfindung liegt darin, eine Abdichtungsanordnung für Kraftfahrzeugscheiben bereitzustellen, welche unempfindlicher gegenüber Fertigungstoleranzen und nur geringe Kräfte zur dauerhaften und sicheren Verrastung der einzelnen Komponenten erfordert, wobei gleichzeitig die Fuge zwischen der Kraftfahrzeugscheibe und der Abdeckung geschlossen ist.

Die Aufgabe der vorliegenden Erfindung wird gemäß dem unabhängigen Anspruch 1 gelöst. Bevorzugte Ausführungen gehen aus den Unteransprüchen hervor.

Die erfindungsgemäße Abdichtungsanordnung für eine Fahrzeugscheibe umfasst mindestens eine Halteschiene mit einem Rastkanal. Der Rastkanal umfasst eine Führungsschiene und einen Federschenkel. Die Halteschiene ist an einer Scheibe befestigt. Die Befestigung der Halteschiene kann über einen Klebstoff oder ein Klebeband erfolgen. Die Halteschiene dient als Verbindungstück zwischen Scheibe und Karosseriebauteil. Die Erfindung umfasst des Weiteren eine Abdeckung, insbesondere eine Wasserkastenabdeckung, mit einer Rastschiene, wobei die Führungsschiene zusammen mit dem Federschenkel die Rastschiene im Rastkanal umschließt. Der Federschenkel und die Rastschiene sind parallel verrastent zueinander ausgerichtet. Gleichzeitig berührt die Abdeckung über die Abdeckungskante eine Glaskante der Scheibe. Der Ausdruck "berührt" umfasst im Sinne der Erfindung im nicht belasteten Zustand einen zumindest abschnittweisen direkten Kontakt zwischen der Abdeckung und der Glaskante. Aufgrund von Einbautoleranzen erstreckt sich der direkte Kontakt zwischen der Abdeckung und der Glaskante auf mehr als 50%, bevorzugt mehr als 70% und besonders bevorzugt mehr als 90% der Länge der Abdeckung, wobei der Abstand (im Folgenden auch Fuge oder Spalt genannt) im restlichen Bereich kleiner 0,5 mm beträgt. Ein derart kleiner Spaltbereich ist ausreichend, um Verschmutzungen wie Blätter, kleine Steine oder Sand vom Inneren der Abdichtungsanordnung fernzuhalten.

Die Führungsschiene umfasst an dem der Scheibe abgewandten Ende ein Federelement, wobei das Federelement an einer Anlagefläche an der Unterseite der Abdeckung anliegt und bevorzugt entgegen der Einführungsrichtung angespannt ist, so dass durch die Federkraft ein Druck gegen die Unterseite der Abdeckung ausgeübt wird. Das Federelement ist im Querschnitt bevorzugt als einzelne Lippe, besonders bevorzugt finger- oder zungenförmig, ausgebildet. Zusammen mit der Führungsschiene dichtet das Federelement die Anlagenfläche, bevorzugt vollständig, an der Unterseite der Abdeckung ab und stützt diese gleichzeitig. Das Federelement weist bevorzugt eine hohe spezifische Steifigkeit auf. Das Federelement dichtet den Rastkanal gegenüber der äußeren Atmosphäre ab. Die Führungsschiene liegt über eine Zentrier-Nocke an der Rastschiene an und fixiert und zentriert zusammen mit der Abdeckungskante die Abdeckung innerhalb des Rastkanals. Die Abdeckungskante kann sowohl als ein fester Teil der Abdeckung ausgebildet sein, als auch ein anderes Material, bevorzugt ein elastisches Material umfassen. Die Abdeckungskante ist im Querschnitt bevorzugt dreieckig, viereckig oder trapezförmig ausgebildet.

Die Rastschiene liegt über eine Zentrier-Nocke an der Führungsschiene an und zentriert zusammen mit der Scheibe die Rastschiene. Die Zentrier-Nocke ist als Ausbeulung oder Auswölbung der Führungsschiene ausgebildet. Die Zentrier-Nocke ist bevorzugt ein nicht unterbrochener Teil der Führungsschiene.

Die Zentrier-Nocke und die Glaskante der Scheibe zentrieren die Abdeckung in der lateralen Richtung zur Scheibe, das heißt in Scheibenebene und orthogonal zur Glaskante der Scheibe, und damit die Rastschiene im Rastkanal. Die Verrastungsanordnung aus Federschenkel und Rastschiene wird damit von der Zentrier- beziehungsweise Positionieraufgabe entlastet und kann entsprechend dünnwandig ausgelegt werden, was wiederum zu kleinen Einrastkräften führt. Die Verrastungsanordnung aus Federschenkel und Rastschiene wird derart ausgelegt, nur noch eine Rückhaltekraft auf die Abdeckung auszuüben und so ein "ausrasten" der Abdeckung aus dem Rastkanal zu verhindern. Eine Zentrierrippe oder ein Positionierungs-anschlag wie sie aus dem Stand der Technik bekannt sind, sind nicht mehr notwendig.

All dies hat den erfindungsgemäßen Vorteil, dass keine unerwünschte Schattenfuge (Spalt) zwischen Abdeckung und Scheibe auftritt. Trotz möglicher und manchmal unvermeidlicher Fertigungstoleranzen ist eine exakte Positionierung von Halteschiene sowie Abdeckung an der Scheibe über die Abdeckungskante und die Zentrier-Nocke möglich.

Das Federelement umfasst bevorzugt Elastomere und/oder Thermoplastische Elastomere, bevorzugt Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV-(raumtempertur-vernetzenden-Silikonkautschuk), HTV-(hochtemperturvernetzenden) Silikonkautschuk, peroxidischvernetzten-Silikonkautschuk und/oder additionsvernetzten-Silikonkautschuk Polyacrylate Styrol/Butadien-Blockcopolymere (SBS) und/oder Ethylen-Propylen-Dien-Kautschuk (EPDM).

Das Federelement ist bevorzugt als (teil-) Hohlkörper, poröser Vollkörper oder als Vollkörper ausgebildet. Die unterschiedliche Gestaltung des Federelements erlaubt eine zusätzliche Variation und Steuerung der Stabilität, des Gewichts und der Elastizität.

Das Federelement weist bevorzugt eine Shore-Härte von Shore A 40 bis Shore A 90, bevorzugt Shore A 50 bis Shore A 75 auf. Die erfindungsgemäße Shore-Härte erlaubt eine reversible aber gleichzeitig feste und dichte Abdichtung der Anlagenfläche.

Das Federelement weist bevorzugt eine Länge von 2 mm bis 8 mm, bevorzugt 3 mm bis 6 mm auf. Diese Länge ermöglicht eine optimale Abdichtung und Zentrierung des Federelements. Würde eine größere Länge gewählt, so kann die Stützwirkung nachlassen, bei einer kürzeren Länge kann die Abdichtung teilweise eingeschränkt sein. Das Feder-element hat bevorzugt einen Durchmesser am Fußpunkt von 0,5 mm bis 3 mm, besonders bevorzugt 1 mm bis 2 mm. Der Fußpunkt bezeichnet den Bereich des Berührungsbereichs des Federelements mit der Führungsschiene. Das Federelement hat bevorzugt einen Durchmesser am freien Ende von 0,2 mm bis 1,5 mm, bevorzugt von 0,5 mm bis 1 mm. Die genannten Dimensionierungen verbessern besonders in Kombination mit einer Shore-Härte des Federelements von Shore A 40 bis Shore A 90 die gleichzeitige abstützende, abdichtende und vor allem zentrierende Wirkung des Federelements.

Die Halteschiene und/oder die Führungsschiene enthalten bevorzugt eine Verstärkungseinlage. Die Verstärkungseinlage erhöht die Festigkeit der Halteschiene und ermöglicht eine weitere Regulierung der Festigkeit. Die Verstärkungseinlage umfasst bevorzugt Metalle, organische Polymere oder Kompositwerkstoffe.

Die Abdeckungskante kann aus dem gleichen Material wie die Abdeckung bestehen und bevorzugt einstückig mit dem Rest der Abdeckung ausgestaltet sein.

In einer vorteilhaften Ausgestaltung der Erfindung weist die Abdeckungskante eine gummiartige, elastische Dichtung auf, bevorzugt in Form einer Kante. Die elastische Dichtung ist bevorzugt benachbart zur Glaskante der Scheibe angeordnet und so ausgestaltet, dass sie diese berührt. In einer besonders vorteilhaften Ausgestaltung der erfindungsgemäßen Abdeckungskante ist die elastische Dichtung an der Unterseite der Abdeckung angeordnet und kann von außen optisch nicht wahrgenommen werden. Dazu kann die Abdeckung an der Unterseite angeschrägt sein und die Abdeckungskante die Anschrägung ganz oder teilweise auffüllen. Diese Ausgestaltungsform ergibt ein möglichst homogenes Erscheinungsbild aus der Anordnung von Scheibe und Abdeckung.

Die elastische Dichtung weist als Weichkomponente eine bevorzugt niedrigere Härte und Steifigkeit als die Abdeckung auf. Durch ihre elastische Form werden Bauteiltoleranzen minimiert und das Risiko von Geräuschentwicklung durch Relativbewegungen zwischen der Abdeckung und der Scheibe vermindert. Die elastische Dichtung weist bevorzugt eine Shore-Härte von Shore A 40 bis Shore A 75, bevorzugt Shore A 50 bis Shore A 65 auf. Die erfindungsgemäße Shore-Härte erlaubt eine ausreichende Festigkeit für die Zentrierung als auch eine ausreichende Nachgiebigkeit zum Ausgleich von Fertigungstoleranzen.

Die Halteschiene wird bevorzugt über eine Klebeverbindung mit der Scheibe verbunden. Die Klebeverbindung ermöglicht eine einfache, stabile und haltbare Befestigung der Scheibe an der Halteschiene und über diese am Anbauteil. Die Klebeverbindung umfasst oder enthält bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon. Die Kontaktfläche der Klebeverbindung mit der Scheibe oder Halteschiene kann optional vorbehandelt werden, beispielsweise mit einem Primer oder einer Plasmabehandlung.

Die Klebeverbindung umfasst bevorzugt ein doppelseitig klebendes Klebeband. Das doppelseitige Klebeband ermöglicht eine sehr schnelle und präzise Fixierung der Scheibe an der Halteschiene. Eine Aushärtung des Klebstoffes ist in der Regel nicht notwendig. Auch entfällt eine Dosierung des Klebstoffes.

In einer vorteilhaften Ausgestaltungsvariante umfasst der Federschenkel einen Metall- oder Kunststoffeinsatz, bevorzugt eine Metallfolie oder -Feder.

In einer alternativen Ausgestaltungsvariante ist der Federschenkel ohne Metall- oder Kunststoffeinsätze ausgeführt. Dadurch werden besonders geringe Einrastkräfte für das Einrasten der Rastschiene zwischen der Führungsschiene und dem Federschenkel erzielt. Der Federschenkel kann insbesondere eine gefaltete oder gerollte Metallfolie mit einem aufgesetzten, beispielsweise polymeren, Rasthaken umfassen oder daraus bestehen.

Der Federschenkel weist bevorzugt einen Rasthaken auf. Der Rasthaken ist bevorzugt wiederhackenförmig ausgebildet und verbessert die Verrastung und Verankerung des Federschenkels mit der Rastschiene.

Der Rasthaken weist bevorzugt eine abgerundete Fläche auf, welche ein einfacheres Einrasten mit der Rastschiene bei gleichzeitig hoher Stabilität gegenüber einer späteren Lösung der Verrastung beinhaltet.

Die Rastschiene umfasst bevorzugt Aussparungen oder Wölbungen. Diese Strukturelemente ermöglichen und sichern das Einrasten und Verrasten des Federschenkels mit der Rastschiene und damit die Fixierung des Anbauteils, beispielsweise eines Wasserkasten, an der Scheibe.
Der Federschenkel ist bevorzugt auslenkbar oder mit der Halteschiene auslenkbar verbunden. In Abhängigkeit von der Auslenkkraft kann die Verbindung zwischen Anbauteil und Scheibe reversibel oder irreversibel geschlossen werden.

Die Erfindung umfasst des Weiteren ein Verfahren zur Herstellung einer Abdichtungsanordnung. In einem ersten Schritt wird eine Halteschiene über eine Klebeverbindung mit einer Scheibe verbunden. In einem folgenden Schritt wird eine Führungsschiene innerhalb eines Führungskanals einer Abdeckung angeordnet. Parallel oder anschließend wird die Abdeckung mit einer Rastschiene in einen Rastkanal über einen Rasthaken hinaus unter Anspannung eines Federelements zwischen der Führungsschiene und einer Anlagefläche an der Unterseite der Abdeckung eingedrückt wird. Im abschließenden Schritt bewegt sich die Abdeckung unter Entspannung des Federelements zurück und wobei der Rasthaken an der Rastschiene eingerastet wird.

Die Erfindung umfasst des Weiteren die Verwendung einer erfindungsgemäßen Abdichtungsanordnung als Windschutzscheibe oder Heckscheibe, bevorzugt als Wasserkastenabdeckung einer Windschutzscheibe.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein.

Es zeigen:
- Figur 1: einen Querschnitt der erfindungsgemäßen Abdichtungsanordnung,
- Figur 2: einen Querschnitt einer Abdichtungsanordnung nach dem Stand der Technik,
- Figur 3: einen vergrößerten Ausschnitt der erfindungsgemäßen Abdichtungsanordnung,
- Figur 4: ein Fließschema des Verfahrens zur Herstellung der erfindungsgemäßen Abdichtungsanordnung und
- Figur 5: einen vergrößerten Querschnitt des Rasthakens aus Figur 1 während des Einrastens.

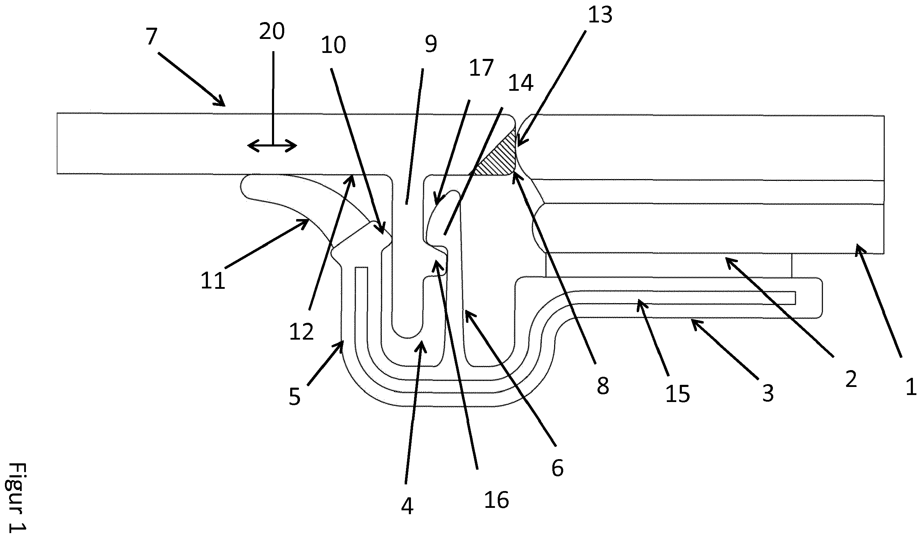

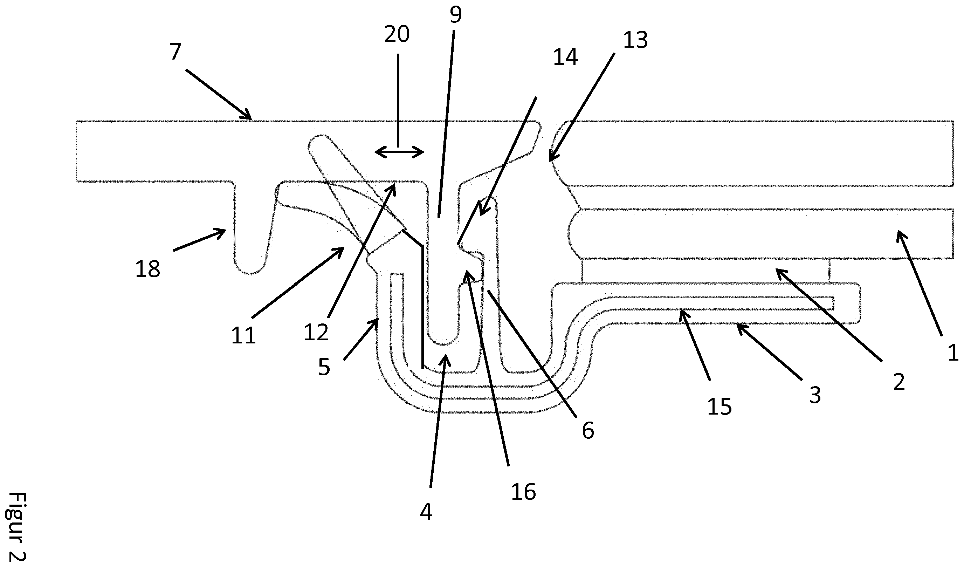

Figur 1 zeigt einen Querschnitt der erfindungsgemäßen Abdichtungsanordnung. Eine Scheibe 1, bevorzugt eine Verbundglasscheibe, ist über eine Klebeverbindung 2 mit einer Halteschiene 3 verbunden. In einer optionalen Ausgestaltung der Erfindung kann die Kontaktfläche der Klebung Vorbehandelt werden, beispielsweise mit einem Primer oder einer Plasmabehandlung der Halteschiene. Die Halteschiene 3 dient zur Verbindung eines Fahrzeugbauteils, bevorzugt einem Wasserkasten, mit der Scheibe 1. Die Halteschiene 3 umfasst einen Rastkanal 4, wobei der Rastkanal 4 von einer Führungsschiene 5 und einem Federschenkel 6 gebildet wird. Die Halteschiene 3 umfasst eine Verstärkungseinlage 15. Die Verstärkungseinlage 15 umfasst bevorzugt Metalle und elastische Kunststoffe und kann optional auch die Steifigkeit der Halteschiene 3 erhöhen. Eine Abdeckung 7, bevorzugt von einem Wasserkasten, ist über eine Rastschiene 9 mit der Halteschiene 3 verbunden und befestigt. Die Fixierung der Rastschiene 9 erfolgt über eine Zentrier-Nocke 10 an der Führungsschiene 5 und über die Abdeckungskante 8 an der Glaskante der Scheibe 1. Die Abdeckungskante 8 als elastische Dichtung in Form einer weichen Kante dient des Weiteren auch als Puffer beim Einbau und gleicht Fertigungstoleranzen aus. Ein Positionierungs-anschlag 18 wie in Figur 2 ist nicht notwendig. Die Verbindung Federschenkel 6 und Rastschiene 9 erfolgt über die Wölbung 16 sowie den Rasthaken 14. Die Verbindung Federschenkel 6 und Rastschiene 9 trägt nur geringfügig zur Zentrierung bei, sie bildet vielmehr eine Rückstellkraft aus, welche ein Ausrasten der Abdeckung 7 verhindert.

Figur 2 zeigt einen Querschnitt einer Abdichtungsanordnung nach dem Stand der Technik. Eine Scheibe 1, bevorzugt eine Verbundglasscheibe, ist über eine Klebeverbindung 2 mit einer Halteschiene 3 verbunden. Die Halteschiene 3 dient zur Verbindung eines Fahrzeugbauteils, bevorzugt einem Wasserkasten, mit der Scheibe 1. Die Halteschiene 3 umfasst einen Rastkanal 4, wobei der Rastkanal 4 von einer Führungsschiene 5 und einem Federschenkel 6 gebildet wird. Die Halteschiene 3 umfasst eine Verstärkungseinlage 15. Die Verstärkungseinlage umfasst bevorzugt Metalle und elastische Kunststoffe und kann optional auch die Steifigkeit der Halteschiene 3 erhöhen. Eine Abdeckung 7, bevorzugt von einem Wasserkasten, bildet mit einer Rastschiene 9 und einem Positionierungsanschlag 18 einen Führungskanal. Die als Teil der Halteschiene 3 ausgebildete Führungsschiene 5 ist im Führungskanal angeordnet und dichtet den Führungskanal mit einem Federelement 11 ab. Das Federelement 11 ist in Figur 2 gleichzeitig in gespannter und entspannter Stellung gezeigt. Gleichzeitig ist die Rastschiene 9 in dem Rastkanal 4 an einem Federschenkel 6 eingerastet und sorgt für eine Fixierung der Abdeckung 7. Im Führungskanal 8 ist das Federelement 11, bevorzugt im Form einer polymeren, gummihaltigen und elastischen Lippe, zwischen einer Anlagefläche 12 an der Unterseite der Abdeckung 7, einem Positionierungs-anschlag 18 und der Führungsschiene 5 eingespannt. Das Federelement 11 ist bevorzugt im Querschnitt als einzelne, fingerförmige Lippe ohne weitere Aussparrungen oder Fortsätze ausgebildet. Wie oben beschrieben dichtet das Federelement 11 die Anlagefläche 12 an der Unterseite der Abdeckung 7 zwischen dem Positionierungsanschlag 18 und der Rastschiene 9 ab. Gleichzeitig stützt das Federelement 11 die Abdeckung 7 auf der Rastschiene 3.

Beim Stand der Technik nach Figur 2 erfolgt die Fixierung und Zentrierung der Abdichtungsanordnung in lateraler Richtung 20 zur Scheibe durch einen Führungskanal, der aus der Rastschiene 9 und dem Positionierungsanschlag 18 gebildet ist und in dem die Führungsschiene 5 und das Federelement 11 eingespannt sind. Ein wesentlicher Vorteil der Erfindung ist, dass der Positionierungsanschlag 18 und damit der Führungskanal nicht mehr benötigt wird, was fertigungstechnisch eine große Vereinfachung darstellt. Die Fixierung und Zentrierung der Rastschiene 9 erfolgt in lateraler Richtung 20 vollständig über die Zentrier-Nocke 10 an der Führungsschiene 5 und in synergistischer Wechselwirkung mit der Abdeckungskante 8 an der Glaskante 13 der Scheibe 1. Durch diese Maßnahme erreicht man gleichzeitig eine ausreichende Abdichtung und einen ausreichenden Lückenschluß zwischen Glaskante 13 und Abdeckungskante 8.

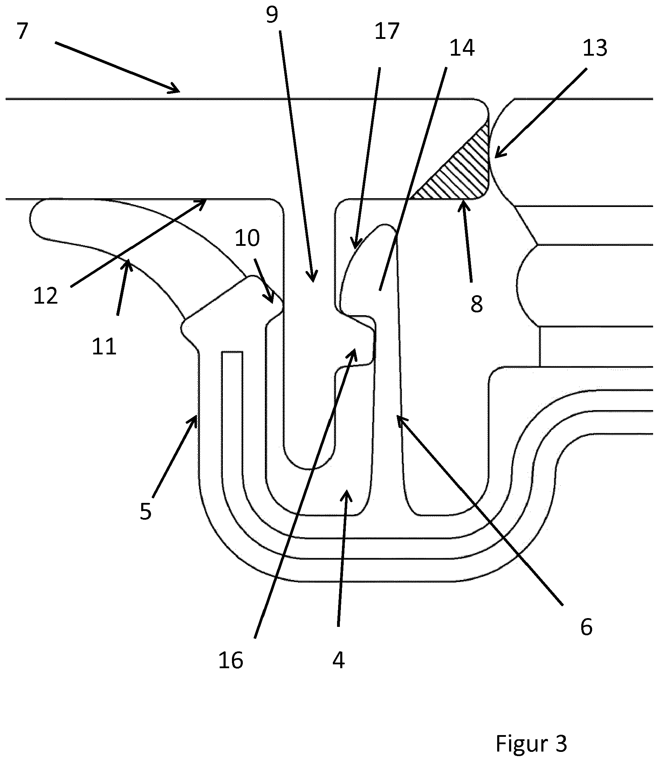

Figur 3 zeigt einen vergrößerten Ausschnitt der erfindungsgemäßen Abdichtungsanordnung. Der Aufbau entspricht dem in Figur 1 beschriebenen Grundaufbau. Die Fixierung der Rastschiene 9 erfolgt über eine Zentrier-Nocke 10 an der Führungsschiene 5 und über die Abdeckungskante 8 an der Glaskante der Scheibe 1. Die Verbindung Federschenkel 6 und Rastschiene 9 erfolgt über die Wölbung 16 der Rastschiene 9 sowie den Rasthaken 14 des Federschenkels 6. Die Abdeckungskante 8 in Form einer elastischen Dichtung kann Fertigungstoleranzen beim Einbau der Wasserkastenabdichtung ausgleichen. Des Weiteren kann so die Gefahr von Geräuschbildung bei Relativbewegungen zwischen Scheibe und Abdeckung verringert oder vermieden werden.

Dies war für den Fachmann unerwartet und überraschend.

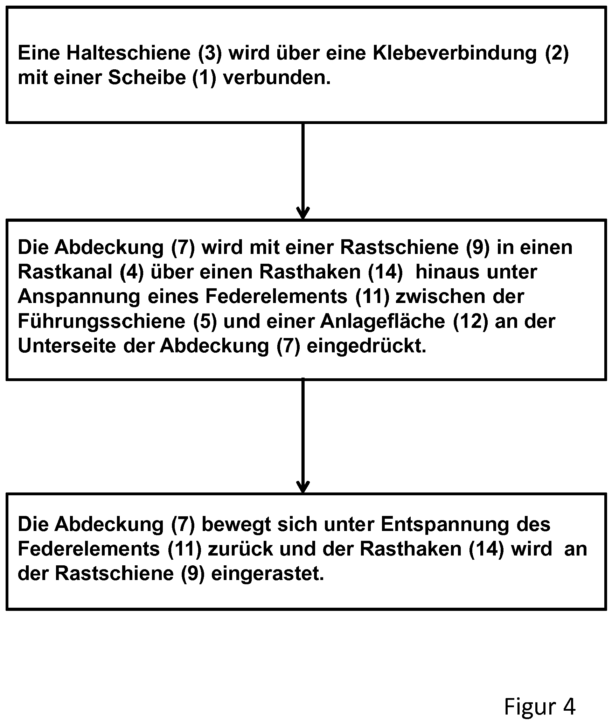

Figur 4 zeigt ein Fließschema des erfindungsgemäßen Verfahrens zur Herstellung der Abdichtungsanordnung. In einem ersten Schritt wird eine Halteschiene 3 über eine Klebeverbindung 2 in Form eines doppelseitigen Klebebandes mit einer Scheibe 1 verbunden. Anschließend wird die Abdeckung 7 mit einer Rastschiene 9 in einen Rastkanal 4 über einen Rasthaken 14 hinaus unter Anspannung eines Federelements 11 zwischen der Führungsschiene 5 und einer Anlagefläche 12 an der Unterseite der Abdeckung 7 eingedrückt. Im abschließenden Schritt bewegt sich die Abdeckung 7 unter Entspannung des Federelements 11 zurück und wobei der Rasthaken 14 an der Aussparungen oder Wölbungen 16 der Rastschiene 9 eingerastet wird und die Glaskante 13 die Abdeckungskante 8 berührt.

In einer vorteilhaften Ausgestaltung der erfindungsgemäßen Abdichtungsanordnung ist die die konvex gekrümmte Einrastführungsfläche 17 im distalen und der Auswölbung 16 zugewandten Bereich des Rasthakens 14 angeordnet. Distal bedeutet hier der Bereich des Rasthakens 14, der beim Einrasten zuerst auf die Wölbung 16 trifft und von dem Verbindungspunkt zwischen Federschenkel 6 und Halteschiene 3 entfernt angeordnet ist.

Rasthaken nach dem Stand der Technik weisen üblicherweise in ihrem distalen Bereich eine Einrastführungsfläche in Form einer schiefen Ebene mit konstantem Winkel auf. Das passende Verrastungselement, insbesondere eine Wölbung, weist eine Einrastgleitkante mit einer Verrundung mit kleinem Radius auf, um Kraftspitzen beziehungsweise Druckspitzen zu vermeiden, wenn die Einrastgleitkante entlang der Führungsebene eingeführt wird. Die Kraft, die zum Einführen und Verrasten des Rasthakens mit dem Verrastungselement notwendig ist, ist eine Funktion des Keilwinkels ϕ (Phi) zwischen Einführungsrichtung und schiefer Ebene der Einrastführungsfläche, wobei die Kraft mit zunehmendem Keilwinkel ϕ größer wird. Eine Einrastführungsfläche in Form einer schiefen Ebene mit konstantem Winkel hat somit den Nachteil, dass mit zunehmender Auslenkung des Federschenkels der Keilwinkel ϕ zwischen Einführungsrichtung und schiefer Ebene zunimmt und dadurch die zum Einrasten notwendige Einrastkraft stark zunimmt.

Dagegen weist die erfindungsgemäße Einrastführungsfläche 17 des Rasthakens 14 im Querschnitt eine konvex gekrümmte Kontur auf. Die erfindungsgemäße konvex gekrümmte Kontur bewirkt, dass einer Vergrößerung des Keilwinkels ϕ verringert oder vermieden wird, wie es sich bei Einrastführungsflächen in Form einer schiefen Ebene nach dem Stand der Technik beim Einführen ergeben würde. Das heißt, bei erfindungsgemäß konvex gekrümmten Einrastführungsflächen 17 bleibt der Keilwinkel ϕ beispielsweise im Wesentlichen konstant und unabhängig von der Auslenkung des Federschenkels 6. Dies hat den besonderen Vorteil, dass die Abdeckung 7 präzise und ohne allzu großen Kraftaufwand mit der Halteschiene 3 verrastet werden kann. Alternativ kann der Keilwinkel ϕ und damit die Einrastkraft F_{E} durch eine bestimmte konvexe Krümmung der Einrastführungsfläche 17 gezielt beeinflusst werden, die durch einfache Überlegungen oder Experimente berechnet werden kann. So kann die Krümmung der Einrastführungsfläche 17 beispielsweise derart geführt werden, dass zu Beginn des Einrastvorgangs eine größere Einrastkraft F_{E} notwendig ist, als gegen Ende des Einrastvorgangs. Alternativ kann die Krümmung der Einrastführungsfläche 17 beispielsweise derart geführt werden, dass zu Beginn des Einrastvorgangs eine kleinere Einrastkraft F_{E} notwendig ist, als gegen Ende des Einrastvorgangs, um einen deutlicheren Einrasteffekt taktil oder akustisch wahrzunehmen.

In einer vorteilhaften Ausgestaltung der erfindungsgemäßen Einrastführungsfläche 17 weist die konvexe Krümmung einen lokalen Krümmungsradius r_{EF} von 1,5*b bis 5,0*b und bevorzugt von 2,0*b bis 4,0*b auf, wobei b die maximale Auslenkung des Rasthakens 14 während des Einrastvorgangs ist. Lokaler Krümmungsradius bedeutet hier, dass die konvexe Krümmung an verschiedenen Punkten entlang der Kontur, unterschiedliche Krümmungsradien aufweisen kann, die jeweils im oben angegebenen Bereich liegen. Wie Untersuchungen des Erfinders ermöglichen lokale Krümmungsradien in diesem Bereich ein einfaches und betriebssicheres Einrasten unter Aufbietung von geringeren Einrastkräften F_{E}.

In einer vorteilhaften Ausgestaltung der erfindungsgemäßen Einrastführungsfläche 17 weist die konvexe Krümmung einen konstanten Krümmungsradius r_{EF} von 1,5*b bis 5,0*b und bevorzugt von 2,0*b bis 4,0*b auf, wobei b die maximale Auslenkung des Rasthakens 14 ist. Wie Untersuchungen des Erfinders ergaben ermöglichen Krümmungsradien in diesem Bereich ein einfaches und betriebssicheres Einrasten unter Aufbietung von geringeren Einrastkräften F_{E}. Durch den konstanten Krümmungsradius sind derartige Führungsflächen 17 einfach zu konstruieren und herzustellen.

In einer vorteilhaften Ausgestaltung der erfindungsgemäßen Abdichtungsanordnung weist die Einrastgleitkante 19 einen Krümmungsradius r_{EG} von 0,05*b bis 0,5*b und bevorzugt von 0,2*b bis 0,4*b auf, wobei b die maximale Auslenkung des Rasthakens 14 ist. Wie Untersuchungen des Erfinders ergaben, sind derartige Krümmungsradien der Einrastgleitkante 17 besonders gut geeignet Druckspitzen an der Einrastgleitkante 19 und der Einrastführungsfläche17 zu vermeiden und deren Materialien zu schonen.

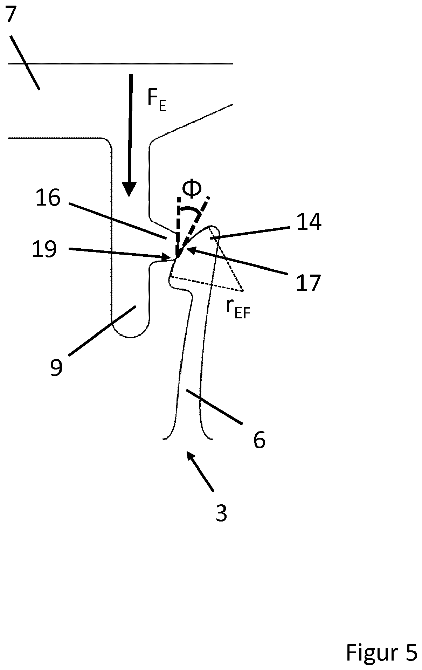

Figur 5 zeigt die Grundkontur eines Federschenkels 6 mit Rasthaken 14 und der Rastschiene 9 mit Wölbung 16 aus Figur 1 während des Einrastvorgangs in einer vergrößerten Querschnittsdarstellung.

Der Rasthaken 14 weist auf der der Rastschiene 9 zugewandten Seite, im distalen Bereich eine Einrastführungsfläche 17 auf. Die Einrastführungsfläche 17 ist konvex gekrümmt. Die Einrastführungsfläche 17 hat hier beispielweise die Form eines Kreissegments mit einem Krümmungsradius der Einrastführungsfläche r_{EF} von 2 mm. Die Auswölbung 16 weist auf der dem Federschenkel 6 zugewandten Seite in ihrem distalen Bereich eine Einrastgleitkante 19 auf. Distal bedeutet hier der Bereich des Rasthakens 14, der beim Einrasten zuerst auf die Wölbung 16 trifft und von dem Verbindungspunkt zwischen Federschenkel und Halteschiene entfernt angeordnet ist. Die Einrastgleitkante 19 hat hier beispielweise die Form eines Kreissegments mit einem Krümmungsradius der Einrastgleitkante r_{EG} von 0,15 mm. Die maximale Auslenkung b des Rasthakens 14 beträgt in diesem Beispiel 0,7 mm, was hier im Wesentlichen der Breite der Wölbung 16 entspricht.

Während des Einrastvorgangs wird eine Einrastkraft F_{E} auf die Abdeckung ausgeübt. Dabei trifft die Einrastgleitkante 19 unter einem Keilwinkel ϕ (Phi) auf die Tangente der Einrastführungsfläche 17 des Rasthakens 14. Die Einrastkraft F_{E} trifft im Berührpunkt zwischen Einrastgleitkante 19 und Einrastführungsfläche 17 auf den Rasthaken 14 und wird in eine Querkraft umgesetzt, so dass der Rasthaken 14 durch die Querkraft unter Anspannung des Federschenkels 6 von der Rastschiene 9 wegbewegt wird. Die notwendige Einrastkraft F_{E} hängt dabei von der Rückstellkraft des Federschenkels 6, der Reibung zwischen der Einrastführungsfläche 17 und der Einrastgleitkante 19 und insbesondere vom Keilwinkel ϕ zwischen der Richtung der Einrastkraft F_{E} und der Tangente an die Einrastführungsfläche 17 ab. Dies hat den besonderen Vorteil, dass die Abdeckung 7 präzise und ohne allzu großen Kraftaufwand mit der Halteschiene 3 verrastet werden kann.

Dies war für den Fachmann unerwartet und überraschend.

### Bezugszeichenliste:

- 1: Scheibe
- 2: Klebeverbindung
- 3: Halteschiene
- 4: Rastkanal
- 5: Führungsschiene
- 6: Federschenkel
- 7: Abdeckung
- 8: Abdeckungskante/elastische Dichtung
- 9: Rastschiene
- 10: Zentrier-Nocke
- 11: Federelement
- 12: Anlagefläche
- 13: Glaskante der Scheibe
- 14: Rasthaken
- 15: Verstärkungseinlage
- 16: Aussparungen oder Wölbungen
- 17: abgerundete Fläche des Rasthakens 14, Einrastführungsfläche
- 18: Positionierungsanschlag
- 19: Einrastgleitkante
- 20: laterale Richtung

## Patentansprüche

1. Abdichtungsanordnung für eine Fahrzeugscheibe mindestens umfassend
- eine Halteschiene (3) mit einem Rastkanal (4), wobei der Rastkanal (4) eine Führungsschiene (5) und einen Federschenkel (6) umfasst und die Halteschiene (3) an einer Scheibe (1) befestigt ist,
- eine Abdeckung (7) mit einer Rastschiene (9), wobei die Führungsschiene (5) zusammen mit dem Federschenkel (6) die Rastschiene (9) im Rastkanal (4) umschließen, wobei der Federschenkel (6) und die Rastschiene (9) parallel verrastent zueinander ausgerichtet sind, wobei
- die Abdeckung (7) mit einer Abdeckungskante (8) eine Glaskante (13) der Scheibe (1) berührt,
- die Führungsschiene (5) ein Federelement (11) umfasst und das Federelement (11) an einer Anlagefläche (12) auf der Unterseite der Abdeckung (7) angeordnet und angespannt ist und
- wobei die Führungsschiene (5) über eine Zentrier-Nocke (10) an der Rastschiene (9) anliegt und zusammen mit der Abdeckungskante (8) die Abdeckung (7) im Rastkanal (4) fixiert und zentriert.

2. Abdichtungsanordnung nach Anspruch 1, wobei das Federelement (11) im Querschnitt als einzelne Lippe ausgebildet ist

3. Abdichtungsanordnung nach Anspruch 1 oder 2, wobei das Federelement (11) eine Shore-Härte von Shore A 40 bis Shore A 90, bevorzugt Shore A 50 bis Shore A 75 aufweist.

4. Abdichtungsanordnung nach einem der Ansprüche 1 bis 3, wobei die Abdeckungskante (8) eine elastische Dichtung in Form einer Kante aufweist.

5. Abdichtungsanordnung nach Anspruch 4, wobei die elastische Dichtung eine Shore-Härte von Shore A 40 bis Shore A 75, bevorzugt Shore A 50 bis Shore A 65 aufweist.

6. Abdichtungsanordnung nach einem der Ansprüche 1 bis 5, wobei die Halteschiene (3) und/oder die Führungsschiene (5) eine Verstärkungseinlage (15) enthält.

7. Abdichtungsanordnung nach einem der Ansprüche 1 bis 6, wobei die Halteschiene (3) über eine Klebeverbindung (2) mit der Scheibe (1) verbunden ist.

8. Abdichtungsanordnung nach Anspruch 7, wobei die Klebeverbindung (2) ein doppelseitiges Klebeband umfasst.

9. Abdichtungsanordnung nach einem der Ansprüche 1 bis 8, wobei der Federschenkel (6) einen Rasthaken (14) aufweist.

10. Abdichtungsanordnung nach einem der Ansprüche 1 bis 9, wobei der Rasthaken eine abgerundete Fläche (17) aufweist.

11. Abdichtungsanordnung nach einem der Ansprüche 1 bis 10, wobei die Rastschiene (9) Aussparungen oder Wölbungen (16) aufweist.

12. Abdichtungsanordnung nach den Ansprüchen 10 und 11, wobei die Wölbung (16) und die abgerundete Fläche (17) zueinander ausgerichtet sind.

13. Abdichtungsanordnung nach einem der Ansprüche 1 bis 12, wobei der Federschenkel (6) auslenkbar ist oder mit der Halteschiene (3) auslenkbar verbunden ist.

14. Verfahren zur Herstellung einer Abdichtungsanordnung, wobei mindestens,
a) eine Halteschiene (3) über eine Klebeverbindung (2) mit einer Scheibe (1) verbunden wird,
b) eine Abdeckung (7) mit einer Rastschiene (9) in einen Rastkanal (4) über einen Rasthaken (14) hinaus unter Anspannung eines Federelements (11) zwischen einer Führungsschiene (5) und einer Anlagefläche (12) an der Unterseite der Abdeckung (7) eingedrückt wird,
c) die Abdeckung (7) unter Entspannung des Federelements (11) sich zurück bewegt und der Rasthaken (14) an der Rastschiene (9) eingerastet wird, wobei die Abdeckung (7) mit einer Abdeckungskante (8) eine Glaskante (13) der Scheibe (1) berührt.

15. Verwendung einer Abdichtungsanordnung nach einem der Ansprüche 1 bis 13 für eine Windschutzscheibe oder Heckscheibe, bevorzugt als Wasserkastenabdeckung einer Windschutzscheibe.

## Claims

1. Sealing arrangement for a vehicle window pane comprising at least
- a retaining rail (3) with a latching channel (4), wherein the latching channel (4) comprises a guide rail (5) and a spring leg (6) and the retaining rail (3) is fastened to a window pane (1),
- a cover (7) with a latching rail (9), wherein the guide rail (5), together with the spring leg (6), surrounds the latching rail (9) in the latching channel (4), wherein the spring leg (6) and the latching rail (9) are oriented so as to latch parallel to each other, wherein
- the cover (7) makes contact, by means of a cover edge (8), with a glass edge (13) of the window pane (1),
- the guide rail (5) comprises a spring element (11) and the spring element (11) is arranged and tensioned against a contact surface (12) on the bottom of the cover (7), and
- wherein the guide rail (5) bears against the latching rail (9) via a centering cam (10) and, together with the cover edge (8), fixes and centers the cover (7) in the latching channel (4).

2. Sealing arrangement according to claim 1, wherein the spring element (11) is formed, in cross-section, as a single lip.

3. Sealing arrangement according to claim 1 or 2, wherein the spring element (11) has a Shore hardness of Shore A 40 to Shore A 90, preferably Shore A 50 to Shore A 75.

4. Sealing arrangement according to one of claims 1 through 3, wherein the cover edge (8) has a resilient seal in the form of an edge.

5. Sealing arrangement according to claim 4, wherein the elastic seal has a Shore hardness of Shore A 40 to Shore A 75, preferably Shore A 50 to Shore A 65.

6. Sealing arrangement according to one of claims 1 through 5, wherein the retaining rail (3) and/or the guide rail (5) includes a reinforcing insert (15).

7. Sealing arrangement according to one of claims 1 through 6, wherein the retaining rail (3) is bonded to the window pane (1) via an adhesive bond (2).

8. Sealing arrangement according to claim 7, wherein the adhesive bond (2) comprises a double-sided adhesive tape.

9. Sealing arrangement according to one of claims 1 through 8, wherein the spring leg (6) has a latching hook (14).

10. Sealing arrangement according to one of claims 1 through 9, wherein the latching hook has a rounded surface (17).

11. Sealing arrangement according to one of claims 1 through 10, wherein the latching rail (9) has recesses or bulges (16).

12. Sealing arrangement according to claims 10 and 11, wherein the bulge (16) and the rounded surface (17) are aligned with each other.

13. Sealing arrangement according to one of claims 1 through 12, wherein the spring leg (6) is deflectable or is deflectably connected to the retaining rail (3).

14. Method for producing a sealing arrangement, wherein at least,
a) a retaining rail (3) is bonded to a window pane (1) via an adhesive bond (2),
b) a cover (7) is pushed with a latching rail (9) into a latching channel (4) beyond a latching hook (14) under tensioning of a spring element (11) between a guide rail (5) and a contact surface (12) on the bottom of the cover (7),
c) the cover (7) moves back under relaxation of the spring element (11) and the latching hook (14) is engaged against the latching rail (9), wherein the cover (7) makes contact, by means of a cover edge (8), with a glass edge (13) of the window pane (1).

15. Use of a sealing arrangement according to one of claims 1 through 13 for a windshield or rear window pane, preferably as a water box cover of a windshield.

## Revendications

1. Dispositif d'étanchéité pour une vitre de véhicule qui comprend au moins
- un rail de support (3) avec un canal d'encliquetage (4), où le canal de verrouillage (4) comprend un rail de guidage (5) et une branche de ressort (6) et le rail de support (3) est fixé à une vitre (1),
- un couvercle (7) avec un rail d'encliquetage (9), où le rail de guidage (5) et la branche de ressort (6) entourent le rail d'encliquetage (9) dans le canal d'encliquetage (4), où la branche de ressort (6) et le rail d'encliquetage (9) sont alignés parallèlement l'un à l'autre, de manière verrouillée, où
- le couvercle (7) touche un bord en verre (13) de la vitre (1) avec un bord de couvercle (8),
- le rail de guidage (5) comprend un élément à ressort (11) et l'élément à ressort (11) est disposé sur une surface de contact (12) sur la face inférieure du couvercle (7) et est serré, et
- où le rail de guidage (5) s'appuie contre le rail d'encliquetage (9) par l'intermédiaire d'une came de centrage (10) et, avec le bord du couvercle (8), fixe et centre le couvercle (7) dans le canal de verrouillage (4).

2. Dispositif d'étanchéité selon la revendication 1, l'élément à ressort (11) étant réalisé sous la forme d'une seule lèvre en section transversale.

3. Dispositif d'étanchéité selon la revendication 1 ou 2, où l'élément à ressort (11) présente une dureté Shore de Shore A 40 à Shore A 90, de préférence Shore A 50 à Shore A 75.

4. Dispositif d'étanchéité selon l'une quelconque des revendications 1 à 3, où le bord de recouvrement (8) comprend un joint élastique sous la forme d'un bord.

5. Dispositif d'étanchéité selon la revendication 4, où le joint élastique a une dureté Shore de Shore A 40 à Shore A 75, de préférence Shore A 50 à Shore A 65.

6. Dispositif d'étanchéité selon l'une des revendications 1 à 5, où le rail de support (3) et/ou le rail de guidage (5) contient un insert de renforcement (15).

7. Dispositif d'étanchéité selon l'une des revendications 1 à 6, où le rail de support (3) est relié à la vitre (1) par un raccord adhésif (2).

8. Dispositif d'étanchéité selon la revendication 7, où le joint adhésif (2) comprend un ruban adhésif double face.

9. Dispositif d'étanchéité selon l'une quelconque des revendications 1 à 8, **caractérisé en ce que** la branche de ressort (6) présente un crochet d'encliquetage (14).

10. Dispositif d'étanchéité selon l'une quelconque des revendications 1 à 9, où le crochet d'encliquetage présente une surface arrondie (17).

11. Dispositif d'étanchéité selon l'une des revendications 1 à 10, où le rail d'encliquetage (9) présente des évidements ou des renflements (16).

12. Dispositif d'étanchéité selon les revendications 10 et 11, où la courbure (16) et la surface arrondie (17) sont alignées l'une sur l'autre.

13. Dispositif d'étanchéité selon l'une des revendications 1 à 12, où la branche de ressort (6) peut être déviée ou est reliée de manière pouvant être déviée au rail de support (3).

14. Procédé de fabrication d'un ensemble d'étanchéité où au moins,
a) un rail de support (3) est relié à une vitre (1) par un raccord adhésif (2),
b) un couvercle (7) avec une rail d'encliquetage (9) est enfoncé dans un canal d'encliquetage (4) au-delà d'un crochet d'encliquetage (14) lors de la mise en tension d'un élément à ressort (11) entre un rail de guidage (5) et une surface de contact (12) sur la face inférieure du couvercle (7),
c) le couvercle (7) recule lors de la détente de l'élément à ressort (11) et le crochet d'encliquetage (14) est verrouillé sur le rail de d'encliquetage (9), où le couvercle (7) touche un bord en verre (13) de la vitre (1) avec un bord du couvercle (8).

15. Utilisation d'un dispositif d'étanchéité selon l'une des revendications 1 à 13 pour un pare-brise ou une lunette arrière, de préférence comme couvercle de boîte à eau d'un pare-brise.
